# FASCICULE DE BREVET EUROPEEN

(11) **EP 0 904 315 B1**
(45) Date de publication et mention de la délivrance du brevet: **07.05.2003**
(21) Numéro de dépôt: 97928343.9
(22) Date de dépôt: 12.06.1997
(51) Int. Cl.: C08G 77/38

(54) **PROCEDE DE PREPARATION D'HUILES SILICONES PAR HYDROSILYLATION AVEC DES POLYORGANOHYDROGENOSILOXANES ET DES MOTIFS CONTENANT AU MOINS UN CYCLE HYDROCARBONE DANS LEQUEL EST INCLUS UN ATOME D'OXYGENE EN PRESENCE D'UNE COMPOSITION CATALYTIQUE HETEROGENE**
VERFAHREN ZUR HERSTELLUNG VON SILICONÖLEN DURCH HYDROSILYLIERUNG VON POLYORGANOHYDROGENSILOXANEN UND SAUERSTOFF- ENTHALTENDEN CYLISCHEN VERBINDUNGEN IN ANWESENHEIT EINES HETEROGENES KATALYSATOR
METHOD FOR PREPARING SILICONE OILS BY HYDROSILYLATION WITH POLYORGANOHYDROGENOSILOXANES AND UNITS CONTAINING AT LEAST ONE HYDROCARBON RING INCLUDING AN OXYGEN ATOM, IN THE PRESENCE OF A HETEROGENEOUS CATALYTIC COMPOSITION

(30) Priorité: 12.06.1996 FR 9607272
(43) Date de publication de la demande: 31.03.1999
(73) Titulaire: RHODIA CHIMIE, 92408 Courbevoie Cédex (FR)
(72) Inventeur: BREUNIG, Stefan, F-38200 Vienne (FR); MIGNANI, Gérard, F-69008 Lyon (FR)
(86) Numéro de dépôt international: FR9701055
(87) Numéro de publication internationale: WO97047677

(56) Documents cités:
- EP-A- 0 468 305
- EP-A- 0 533 170
- EP-A- 0 632 099
- WO-A-96/16126
- US-A- 3 198 766

## Description

La présente invention concerne un nouveau procédé de préparation d'huiles silicones fonctionnalisées contenant au moins un cycle hydrocarboné dans lequel est inclus un atome d'oxygène. En particulier, la présente invention a pour objet un procédé d'hydrosilylation entre des polyorganohydrogénosiloxanes et des motifs insaturés contenant au moins un cycle hydrocarboné dans lequel est inclus un atome d'oxygène.

Les réactions entre des polyorganohydrogénosiloxanes et des oléfines ou des hydrocarbures acétyléniques sont très connues. Les polyorganohydrogénosiloxanes sont, par exemples de formules:
- Me₃SiO-(MeHSiO)ₙ-(Me₂SiO)ₘ- SiMe₃ dans laquelle n et m sont des nombres entiers ou fractionnaires tel que 1≤ n ≤ 1000 et 0 <m ≤ 1000;
- Me₂HSiO-(MeHSiO)ₒ-(Me₂SiO)ₚ- SiHMe₂ dans laquelle o et p sont des nombres entiers ou fractionnaires tel que 0< o ≤ 1000 et 0 < p ≤ 1000.

De nombreux synthons peuvent fonctionnaliser les polyorganohydrogénosiloxanes; par exemple, on utilise comme synthons des alcènes, des styrènes, des allylalcools, des allyloxyethers ou des allylamines. EP-A-0 468 305 divulgue un procédé de préparation de polyorganosiloxanes en utilisant des composés de formule R-OH, où R = C₃₋₁₁-alkényle.

Ces réactions sont très couramment utilisées pour la synthèse d'huiles silicones fonctionnalisées et les huiles obtenues ont des applications dans des domaines très divers tels que l'anti adhérence, la lubrification.

En particulier, on peut préparer des huiles fonctionnalisées avec des synthons de 1,2-époxy-4-vinyl-cyclohexane. A titre d'application, ces huiles silicones fonctionnalisées sont ensuite réticulées thermiquement en présence d'un catalyseur acide tel que l'acide chlorhydrique ou l'acide sulfurique, ou photochimiquement en présence, par exemple, de photoamorceur cationique pour la préparation de films anti-adhérents pour papier et/ou plastiques.

Un nombre très important de compositions catalytiques est utilisé dans les réactions d'hydrosilylation. Les compositions catalytiques les plus connues contiennent des métaux tels que le platine, le rhodium, le cobalt ou le palladium. Des exemples spécifiques de telles compositions catalytiques sont les halogénures de platine et les halogénures de rhodium, par exemple H₂PtCl₆, PtCl₂, (RhCl₃,xH₂O) les complexes de platine avec des siloxanes ayant des groupes insaturés, les complexes de platine avec des oléfines et complexes cationiques de platine avec des nitriles comme ligands.

Généralement, les compositions catalytiques utilisées dans la réaction d'hydrosilylation sont des compositions catalytiques homogènes, i.e., lesdites compositions sont dissoutes dans le milieu réactionnel. L'une des plus employées est la composition catalytique de Karstedt décrite notamment dans le brevet US 3,775,452; cette composition de Karstedt est constituée de complexes de platine dont le degré d'oxydation formel et réel est de zéro (0) et de formule:

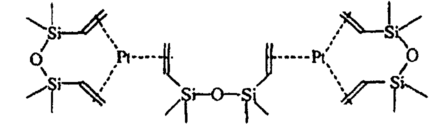

Toutefois, lors de la réaction d'hydrosilylation selon les procédés de l'art antérieur, on observe à différents degrés des réactions d'isomérisation au sein des synthons insaturés, ce qui nécessite de travailler en excès molaire de synthon par rapport au polyorganohydrogénosiloxane dans le milieu réactionnel. Cet excès en proportion de synthon entraîne un coût supplémentaire pour la mise en oeuvre industrielle du procédé. Il serait donc souhaitable de réduire la proportion nécessaire de synthon, ce qui se traduirait par une économie non négligeable au niveau du procédé.

En outre, les procédés d'hydrosilylation de l'art antérieur ne sont pas ou peu adaptés pour les réactions d'hydrosilylation entre des polyorganohydrogénosiloxanes et des synthons contenant un cycle dans lequel est inclus un atome d'oxygène (époxyde, etc.). Ce dernier, lors de l'étape de dévolatilisation a tendance à s'ouvrir et à provoquer des réactions de polymérisation et de réticulation (formation de gomme et/ou de résine) non contrôlées des huiles fonctionnalisées, lesquelles sont initiées par la présence de trace des compositions catalytiques habituelles telles que les compositions catalytiques homogènes qui catalysent aussi la polymérisation de cycles incluant un atome d'oxygène.

D'autre part, les huiles silicones fonctionnalisées obtenues à partir de procédés utilisant la catalyse homogène sont généralement colorées, de l'ordre de 120 à 300 hazen; ce qui limite de ce fait leurs domaines envisageables d'utilisation, notamment dans le domaine de films transparents et anti-adhérents pour papier ou pour films transparents (par exemple de type polyester). Cette coloration est généralement due à la présence dans les huiles fonctionnalisées d'agrégats métalliques ou de colloïdes de taille manométrique, dérivés des compositions catalytiques homogènes utilisées dans les procédés d'hydrosylilation de l'art antérieur. Dans ces cas, les huiles silicones fonctionnalisées nécessitent des étapes supplémentaires de filtration et purification pour pouvoir être utilisable après réticulation dans le domaine des films transparents; ces étapes complémentaires rendent la mise en oeuvre industrielle onéreuse et donc peu viable économiquement.

La Demanderesse a mis au point un nouveau procédé de préparation des huiles silicones fonctionnalisées par hydrosilylation qui permet de réduire de façon significative les réactions d'isomérisation au sein du synthon insaturé et de plus, de réduire très sensiblement l'ouverture de cycle incluant un atome d'oxygène présent sur le synthon insaturé lors de l'étape de dévolatilisation.

Le procédé mis en oeuvre permet d'obtenir des huiles silicones fonctionnalisées transparentes et translucides; ce qui permet d'utiliser les huiles silicones selon l'invention dans des applications exigeant cette qualité, sans nécessiter d'étapes complémentaires de filtration ou de purification.

En particulier, les huiles silicones obtenues à partir du procédé de l'invention sont utilisables après réticulation dans le domaine des encres, le domaine des vernis ainsi que dans le domaine des revêtements, notamment des films, transparents et/ou anti-adhérents par applications sur des supports de natures très variées; par exemple, papiers, verres, plastiques et/ou métaux.

En outre, les huiles préparées sont stables au stockage.

De plus, les huiles obtenues selon l'invention sont dénuées de toxicité; en effet, du fait de l'emploi de composition catalytique hétérogène, on ne retrouve quasiment pas de métaux dans lesdites huiles.

Selon le procédé d'hydrosilylation de la présente invention, le polyorganohydrogénosiloxane est mis à réagir avec des synthons différents ou identiques contenant un cycle hydrocarboné dans lequel est inclus au moins un atome d'oxygène. Cette réaction est effectuée en présence d'une composition catalytique hétérogène comprenant un métal choisi parmi le groupe constitué de cobalt, rhodium, ruthénium, platine, palladium et nickel déposé sur un support inerte. De préférence, le métal de la composition catalytique est le platine.

La quantité de métal contenu dans la composition catalytique hétérogène est comprise entre 0,005% et 5% par rapport au poids du support inerte. Cette quantité de métal est également compris entre 1 et 1000 ppm par rapport au poids du polyorganohydrogénosiloxane.

Par définition, on entend par composition catalytique hétérogène, une composition catalytique pouvant être solide ou liquide qui est non dissoute dans le milieu réactionnel, i.e. le milieu réactionnel comporte au moins deux phases dont une est formée par la composition catalytique.

Le métal est déposé sur des supports inertes variés tels que le noir de carbone, le charbon, l'alumine, la silice traitée ou non-traitée, le sulfate de baryum ou encore des silicones réticulées. Avantageusement, la taille granulométrique des supports catalytiques est supérieure à 10 µm afin d'avoir une bonne filtrabilité ne nécessitant pas d'adjuvants de filtration. Ainsi, cette granulométrie est telle que l'on peut réduire considérablement le temps de filtration.

Les synthons contiennent au moins un cycle hydrocarboné dans lequel est inclus un atome d'oxygène et ont pour formule :
■ (1) 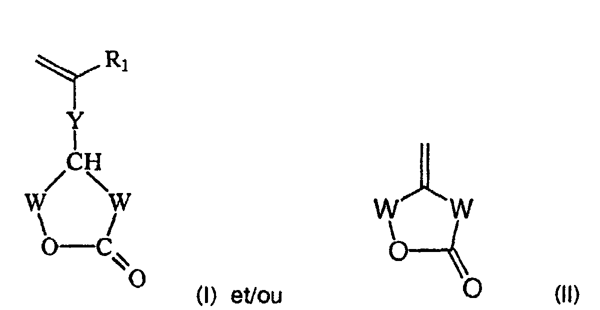 dans lesquelles :
   ■ les symboles **W** sont identiques ou différents et correspondent à un radical hydrocarboné divalent choisi parmi les radicaux alkylènes linéaires ou ramifiés ayant de 1 à 12 atomes de carbone, un des symboles **W** pouvant être une valence libre;
   ■ le symbole **Y** correspond à une valence libre ou un radical divalent choisi parmi les radicaux alkylènes linéaires ou ramifiés ayant de 1 à 12 atomes de carbone et pouvant contenir un hétéroatome, de préférence un atome d'oxygène;
   ■ le symbole **R**_{**1**} correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle;
■ (2) 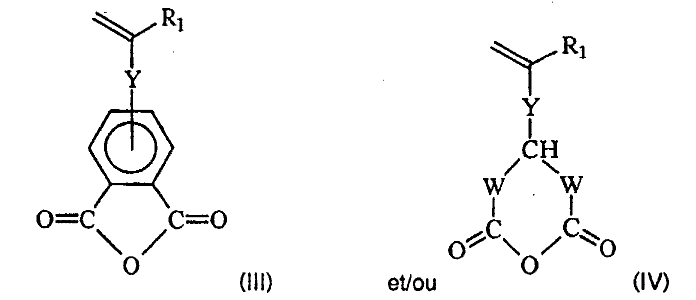 dans lesquelles :
   ■ les symboles **W** sont identiques ou différents et correspondent à un radical hydrocarboné divalent choisi parmi les radicaux alkylènes linéaires ou ramifiés ayant de 1 à 12 atomes de carbone, un des symboles **W** pouvant être une valence libre;
   ■ le symbole **Y** correspond à une valence libre ou un radical divalent choisi parmi les radicaux alkylènes linéaires ou ramifiés ayant de 1 à 12 atomes de carbone et pouvant contenir un hétéroatome, de préférence un atome d'oxygène;
   ■ le symbole **R**_{**1**} correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle;
■ (3) 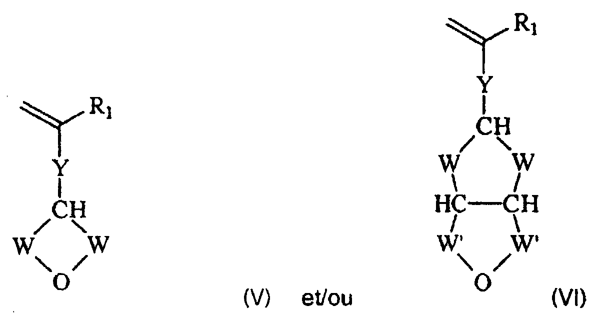 dans lesquelles :
   ■ les symboles **W** sont identiques ou différents et correspondent à un radical hydrocarboné divalent choisi parmi les radicaux alkylènes linéaires ou ramifiés ayant de 1 à 12 atomes de carbone et pouvant contenir au moins une fonction hydroxyle; un des symboles **W** pouvant être une valence libre pour (V) et les deux symboles **W** peuvent être simultanément une valence libre pour (VI);
   ■ les symboles **W'** sont identiques ou différents et correspondent à un radical hydrocarboné divalent choisi parmi les radicaux alkylènes linéaires ou ramifiés ayant de 1 à 12 atomes de carbone; au moins un des symboles **W'** pouvant être une valence libre;
   ■ le symbole **Y** correspond à une valence libre ou un radical divalent choisi parmi les radicaux alkylènes linéaires ou ramifiés ayant de 1 à 12 atomes de carbone et pouvant contenir un hétéroatome, de préférence un atome d'oxygène;
   ■ le symbole **R**_{**1**} correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle; et
■ (4) 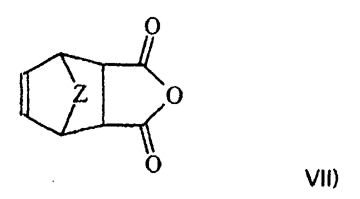 dans laquelle :
   ■ les symboles **W** sont identiques ou différents et correspondent à une valence libre et un radical hydrocarboné divalent choisi parmi les radicaux alkylènes linéaires ou ramifiés ayant de 1 à 2 atomes de carbone;
   ■ le symbole **Z** correspond à un radical divalent choisi parmi un atome de carbone ou un hétéroatome.

De préférence, le cycle hydrocarboné dans lequel est inclus l'atome d'hydrogène comporte au plus 8 atomes dans ledit cycle. De plus, on obtient les meilleurs résultats en accord avec le procédé d'hydrosilylation de l'invention avec des synthons ne contenant qu'un cycle hydrocarboné dans lequel est inclus un atome d'oxygène. En particulier, les synthons utilisés et donnant de bons résultats (voir exemples ci-dessous) ont pour formule : 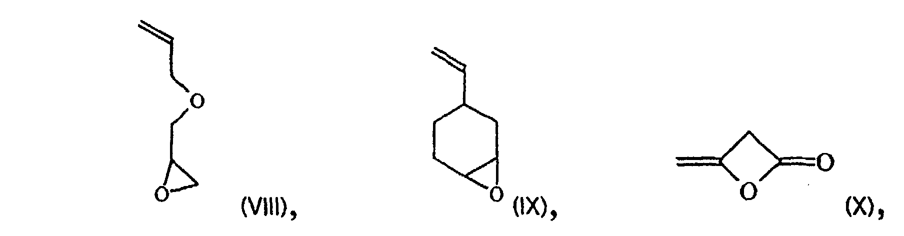 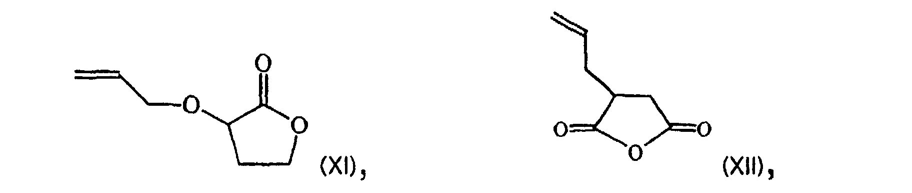 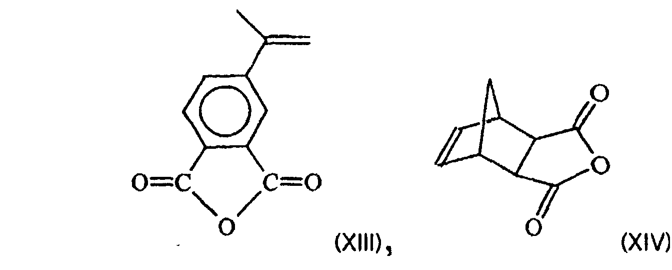 et

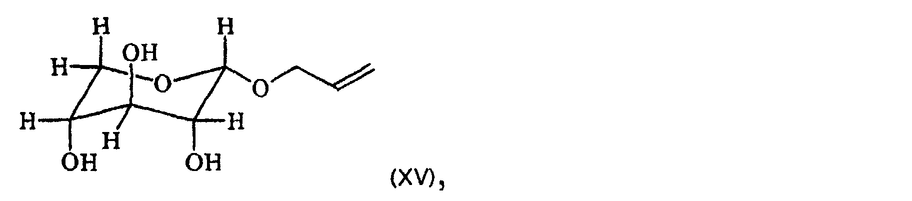

En général, les synthons réagissant avec le polyorganohydrogénosiloxane sont des synthons identiques. Le rapport molaire du polyorganohydrogénosiloxane/ synthons est compris entre 0,01 et 100, de préférence entre 0,1 et 10.

Les polyorganohydrogénosiloxanes utilisés dans les procédés selon l'invention sont de nature très diverse. Ces polyorganohydrogénosiloxanes peuvent être linéaires ou cycliques et ont pour formules moyennes : 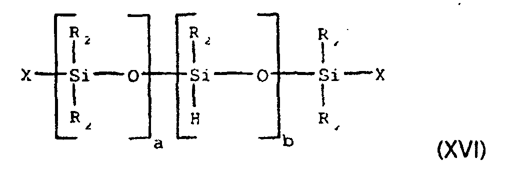 et/ou 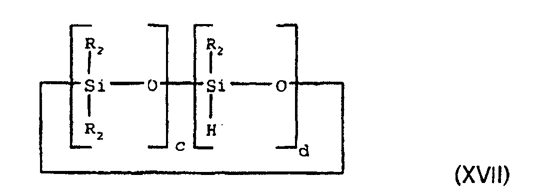 dans lesquelles :
■ les symboles **R**_{**2**} sont identiques ou différents et correspondent à un radical hydrocarboné monovalent choisi parmi le radical phényle et les radicaux alkyles linéaires ou ramifiés ayant de 1 à 6 atomes de carbone, de préférence 1 à 3 atomes de carbone;
■ les symboles **X** sont identiques ou différents et correspondent à un radical monovalent choisi parmi **R**_{**2**}**,** un atome d'hydrogène, un radical méthoxy, et un radical éthoxy;
■ a et b sont des nombres entiers ou fractionnaires, tels que :
   - 0 < a ≤ 200, de préférence 0 < a ≤ 99
   - 0 ≤ b ≤ 200, de préférence 1 < b ≤ 100, et au moins un des deux X correspondant au radical hydrogène si b = 0;
   - 5 < a+b ≤ 200, de préférence 10 < a+b ≤ 100
■ c et d sont des nombres entiers ou fractionnaires, tels que
   - 0 < c < 5, de préférence 0 < c < 3
   - 1 < d < 10, de préférence 1 < d < 5,
   - 3 < a+b < 10, de préférence 3 < a+b < 5

Dans le cadre de l'invention, différents types de compositions catalytiques hétérogènes sont utilisables.

A titre d'exemples non limitatifs, on peut utiliser du platine sur noir de carbone ou charbon tel que la composition catalytique contenant 2,5% de platine en poids déposé sur le support CECA 2S développé par la société CECA, la composition catalytique SCAT 20 (1% de Pt) de la société Engelhard ou la composition catalytique 88 231 (1% Pt) de la société Heraeus. Dans ce cas, le platine peut être déposé sur ce type de support par dépôt d'acide chloroplatinique suivi d'une neutralisation et d'une réduction. De même, l'utilisation de platine sur alumine de préférence de type α tel que la composition catalytique CAL 101 (0,3% de Pt, support SCS9 constitué de α-alumine) commercialisée par la société Procatalyse ou la composition catalytique 88 823 de la société Heraeus (0,5% de Pt sur α-alumine) donne de bons résultats.

Le procédé selon l'invention peut être mis en oeuvre selon diverses variantes. Notamment, il est possible d'utiliser une première mise en oeuvre dans laquelle l'ensemble des réactifs et de la composition catalytique sont mélangés dans le milieu réactionnel (type "batch"). A titre de seconde mise en oeuvre du procédé selon l'invention, celui-ci peut être en continu avec un lit fixe de composition catalytique hétérogène sur lequel passent le polyorganohydrogénosiloxane à fonctionnaliser et le synthon. Ce type de mise en oeuvre est avantageux dans le cas où la taille des grains du support inerte de la composition catalytique est supérieure à 100 µm.

Dans le cadre de ses essais expérimentaux, la Demanderesse a mis au point un procédé avantageux en accord avec la première mise en oeuvre. Ce procédé d'hydrosilylation entre un polyorganohydrogénosiloxane et un synthon insaturé comporte les étapes suivantes :
(a) une quantité de 5 à 5000 ppm, de préférence de 10 à 100 ppm, de composition catalytique hétérogène par rapport à la masse totale des réactifs est introduite sous gaz inerte dans le milieu réactionnel;
(b) le synthon est introduit dans le milieu réactionnel;
(c) ledit milieu est chauffé à une température comprise entre 25°C et 200°C, et de préférence entre 50°C et 160°C;
(d) le polyorganohydrogénosiloxane est ensuite introduit sur une durée comprise 0 et 24 heures, de préférence entre 2,5 et 5 heures; le rapport molaire synthon/silicone étant compris entre 1 et 1,10.
(e) la masse réactionnelle est ensuite filtrée afin de séparer la composition catalytique hétérogène et l'huile silicone fonctionnalisée, et;
(f) l'huile silicone fonctionnalisée est finalement dévolatilisée.

Ce procédé avantageux peut être effectué en masse, ce qui signifie que la réaction entre le polyorganohydrogénosiloxane et le synthon s'effectue en l'absence de solvant. Toutefois, de nombreux solvants tels que le toluène, le xylène, l'octaméthyltétrasiloxane, le cyclohexane ou l'hexane peuvent être utilisés.

D'autre part, la quantité molaire de synthon versée lors de l'étape (b) est inférieure à celle qui est utilisée pour un procédé classique de l'art antérieur. Avantageusement, le rapport molaire synthon/polyorganohydrogénosiloxane est compris entre 1 et 1,05 et ceci sans nuire à la qualité des huiles fonctionnalisées obtenues et au rendement de la réaction.

L'étape (e) de filtration permet, le cas échéant d'éliminer toute trace restante de turbidité de l'huile silicone fonctionnalisée obtenue. D'autre part, la composition catalytique hétérogène peut être récupérée puis réutilisée de nouveau, sans nécessiter de régénération, avec ou sans lavage, et sans que l'on note de baisse d'activité sensible de ses performances.

Les huiles silicones fonctionnalisées obtenues en accord avec l'invention, et notamment selon le procédé avantageux mis au point, sont très stables et ne subissent pas de modifications lors de l'étape de dévolatilisation. Leurs viscosités sont très sensiblement moins élevées par rapport à celles des huiles obtenues à partir des mêmes réactifs et selon les procédés de l'art antérieur, notamment ceux utilisant des catalyseurs homogènes.

Par exemple, la viscosité des huiles de formule (XVIII) fonctionnalisée avec du 1,2-époxy-4-vinyl-cyclohexane, obtenues en accord avec notre procédé, est de l'ordre de 200 à 290 mPa.s; ce qui traduit l'absence d'ouverture des cycles contenant un atome d'oxygène et donc l'absence de réactions de polymérisation, y compris pendant la dévolatilisation, due à l'ouverture de ces cycles.

En outre, la viscosité des huiles obtenues est stable au stockage sur une période de temps très élevée; ce qui signifie qu'aucune réaction parasite n'a lieu au sein des dites huiles (pas de formation de gomme et/ou de résine dans le temps).

De plus, les huiles préparées en accord avec les procédés selon l'invention sont quasi transparentes, de coloration nulle et de turbidité nulle. Cette absence de coloration est notamment observée avec les compositions catalytiques avec un support inerte constitué de noir de carbone. Dans le cadre de notre invention, on entend par coloration nulle une coloration inférieure à 90 Hazen et de préférence inférieure à 40 Hazen. Une coloration comprise entre 40 et 90 Hazen est observée uniquement dans le cas où les synthons sont eux même colorés au départ avant l'hydrosilylation; celle-ci n'est en aucun cas due à la mise en oeuvre du procédé de l'invention. Si les synthons sont incolores avant réaction, les huiles préparées ont une coloration inférieure à 40 Hazen. En ce qui concerne la turbidité, les huiles sont non turbides lorsque leur turbidité est inférieure à 1 NTU et/ou ne présentent plus que des traces minimes de turbidité.

Ces huiles ont également une teneur très faible en métal issu de la composition catalytique; ce qui limite très fortement les réactions indésirables que pourraient provoquer le métal si sa teneur était plus importante. Par exemple, dans le cas d'huiles obtenues selon l'invention en présence d'une composition catalytique contenant notamment du platine, il est possible de mélanger lesdites huiles avec d'autres molécules contenant des fonctions ≡SiH et des molécules contenant des liaisons insaturées sans risquer de nouvelle réaction d'hydrosilylation entre ces molécules.

Le taux d'époxy dosé des huiles obtenues selon l'invention est très élevé et le rapport taux d'époxy dosé/ taux d'époxy théorique est compris entre 0,95 et 1, ce taux d'époxy théorique correspondant au taux de ≡SiH dosé sur le polyorganohydrogénosiloxane avant réaction.

Les huiles silicones selon l'invention du fait de leurs propriétés sont donc employées comme additif (par exemple, à titre de diluant) ou comme composant principal (par exemple, à titre de résine) pour la préparation de compositions réticulables mise en oeuvre pour préparer des encres, des vernis et/ou des revêtements transparents et incolores. En général, ces compositions réticulables comprennent un photoamorceur, une résine organique et/ou silicone à fonctionnalité époxy et/ou acrylate; en outre, ces compositions peuvent comprendre un diluant et/ou un solvant. Ces compositions sont réticulables selon les cas, par exemple sous rayonnement U.V et/ou sous faisceau d'électrons.

### EXEMPLES

Les exemples ci-dessous illustrent la préparation d'huiles silicones fonctionnalisées obtenues selon le procédé de la présente invention.

Les exemples 1 à 9 concernent la synthèse d'huiles silicones fonctionnalisées par des synthons de 1,2-époxyde-4-vinyl-cyclohexane avec un polyorganohydrogénosiloxane dont le nombre de milliéquivalents en fonction ≡SiH est de 128 pour 100 g de polyorganohydrogénosiloxane et de formule moyenne (XVIII) :

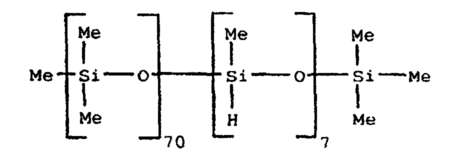

Les exemples 11 à 14 concernent la synthèse d'huiles silicones fonctionnalisées par des synthons de 1,2-époxyde-4-vinyl-cyclohexane avec un polyorganohydrogénosiloxane de formule moyenne (XVI) dont les valeurs pour X, a et b sont précisées dans chaque exemple.

Les exemples 1 à 3 concernent des préparations selon l'art antérieur et les exemples 4 à 14 concernent des préparations en accord avec l'objet de notre invention.

Le schéma réactionnel est le suivant :

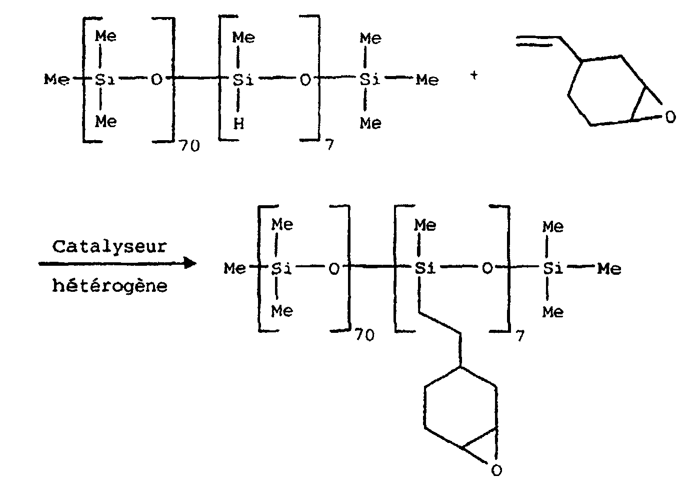

Le dosage des ≡SiH présents sur les huiles fonctionnalisées obtenues est mesuré par gazométrie. On mesure la quantité de H₂ dégagé lors de la réaction entre l'huile silicone fonctionnalisée obtenue et le 1-butanol en présence d'hydroxyde de potassium comme catalyseur (2g de KOH dans 50 ml de 1-butanol).

La coloration des huiles fonctionnalisées obtenues est mesurée à l'aide d'un appareil "liquid-tester LTM1" de Dr. Lange utilisant deux rayons pour la mesure en transmission.

La turbidité des huiles fonctionnalisées obtenues est mesurée à l'aide d'un turbidimètre de Hack par dispersion de lumière (mesure par ratio).

La teneur en platine des huiles fonctionnalisées obtenues est mesurée par ICP-MS.

La viscosité des huiles fonctionnalisées obtenues est mesurée à l'aide d'un appareil Brookfield selon la méthode dynamique (par cisaillement).

Le dosage des époxy sur les huiles fonctionnalisées obtenues est mesuré à l'aide d'un appareil potentiométrique type 716 DMS Titrino de Metrohm selon la méthode de I.M. Kolthoff et P.J. Elving ("Trease on Analytical Chemistry", part II, vol. 14, p. 288).

### Exemple 1 :

Dans un tricot de 100 ml, équipé d'un agitateur vertical, d'un réfrigérant, d'un thermomètre et d'un septum, 6,07 µl de composition catalytique homogène de Karstedt à 11,6% de Pt (11,6 ppm de Pt dans le milieu) et 8,68 g (69,89 mmol, 5% d'excès) de 1,2-époxy-4-vinyl-cyclohexane ont été introduits sous argon.

Ce mélange est chauffé à 90°C. Puis, on coule sur une durée de 1 heure, 52 g (66,56 mmol) de polyorganohydrogénosiloxane de formule (XVIII).

En fin de coulée le taux de transformation en SiH est de 99,7%.

On récupère une huile fonctionnalisée après dévolatilisation à 90°C pendant 2 heures ayant une viscosité de 930 mPa.s.

La coloration de l'huile est de 240 hazen et la teneur en platine est de 11,6 ppm.

Le rapport taux d'époxy dosé/taux d'époxy théorique est de 0,91.

### Exemple 2 :

Dans un tricot de 100 ml, équipé d'un agitateur vertical, d'un réfrigérant, d'un thermomètre et d'un septum, 6,07 µl de composition catalytique homogène de Karstedt à 11,6% de Pt (11,6 ppm de Pt dans le milieu) et 8,68 g (69,89 mmol, 5% d'excès) de 1,2-époxy-4-vinyl-cyclohexane ont été introduits sous argon.

Le mélange est chauffé à 90°C. Puis, on coule sur une durée de 1 heure, 52 g (66,56 mmol) de polyorganohydrogénosiloxane de formule (XVIII).

En fin de coulée le taux de transformation en SiH est de 99,7%.

On continue à chauffer pendant 3 heures. Après filtration, on effectue une dévolatilisation de l'huile à 120°C pendant 2 heures.

L'huile fonctionnalisée obtenue est réticulée et se présente sous forme solide.

### Exemple 3 :

Dans un tricot de 100 ml, équipé d'un agitateur vertical, d'un réfrigérant, d'un thermomètre et d'un septum, 175 mg de catalyseur hétérogène broyé contenant 1% de Pt sur un support constitué de TiO₂, 16,7g de toluène et 2,5 g (20,2 mmol) de 1,2-époxy-4-vinyl- cyclohexane ont été introduits sous argon.

Le mélange est chauffé à 90°C. Puis, 15 g de polyorganohydrogénosiloxane de formule (XVIII) est coulé sur une durée de 3 heures.

En fin de coulée, le taux de transformation est de 91,7%. 2 heures après, le taux est de 96,6% puis atteint 97,4% 20 heures après la coulée.

Le milieu réactionnel est filtré sous pression de 3,5.10⁵ Pa sur filtre Eurofiltec R3506.

Puis, l'huile obtenue est dévolatilisée à l'aide d'un évaporateur rotatif à 100°C sous un vide de 2 10² Pa.

On récupère une huile fonctionnalisée très colorée, de l'ordre de 2430 Hazen et contenant une teneur en platine de 8,1 ppm et la viscosité est de 1460 mPa.s. Le rapport taux d'époxy dosé/taux d'époxy calculé est de 0,91.

### Exemple 4 :

Dans un tricol de 250 ml, équipé d'un agitateur vertical, d'un réfrigérant, d'un thermomètre et d'un septum, 3,89 g de composition catalytique hétérogène non broyé de type CAL 101 (100 ppm de Pt dans le milieu) et 16,7 g (0,134 mol, 5% d'excès) de 1,2 époxy-4-vinyl-cyclohexane ont été introduit sous argon. La concentration de platine

Le mélange est chauffé à 90°C. Puis on coule sur une durée de 3 heures, 100 g (0,128 mol) de polyorganohydrogénosiloxane de formule (XVIII).

En fin de coulée le taux de transformation en SiH est de 98,6%. 2 heures après la coulée, le taux de transformation est de 100%.

La masse réactionnelle est filtrée sur fritté avec une précouche de clarcel. La dévolatilisation est effectuée à l'aide d'un évaporateur rotatif à 100°C sous un vide de 2 10² Pa pendant 2 heures.

On récupère une huile fonctionnalisée parfaitement transparente (coloration de l'ordre de 83 Hazen et pas de turbidité). La viscosité mesurée est de 290 mPa.s et la teneur en platine est de 2.1 ppm. Après 3 mois de stockage (à température ambiante et sous azote), on retrouve une viscosité identique.

Le rapport taux d'époxy dosé/taux d'époxy calculé est de 0,96.

### Exemple 5 :

Dans un tricol de 2 litres, équipé d'un agitateur vertical, d'un réfrigérant, d'un thermomètre et d'un septum, 4,668 g de composition catalytique hétérogène contenant 2,5% de Pt sur support CECA 2S (100 ppm de Pt), et 166,9 g (1,344 mol, 5% d'excès) de 1,2- époxy- 4-vinyl-cyclohexane ont été introduits sous argon.

Le mélange est chauffé à 90°C. On coule sur une durée de 3 heures, 1 kg (1.28 mol) de polyorganohydrogénosiloxane de formule (XVIII).

En fin de coulée le taux de transformation en SiH est de 96,4% et celle ci atteint 97,5%, après 2 heures puis 99,7% après 5 heures.

Après filtration, la dévolatilisation est effectuée à l'aide d'un évaporateur rotatif à 100°C sous un vide de 2 10² Pa.

On récupère une huile fonctionnalisée ayant une viscosité de 300 mPa.s. Après 3 mois de stockage (à température ambiante et sous azote), on retrouve une viscosité identique.

La coloration est de 45 Hazen et la teneur en platine est inférieure à 0,16 ppm. Le rapport taux d'époxy dosé/taux d'époxy calculé est de 0,96. Pas de turbidité observée.

### Exemple 6 :

Dans un tricol de 250 ml, équipé d'un agitateur vertical, d'un réfrigérant, d'un thermomètre et d'un septum, la totalité de la composition catalytique hétérogène lavée, séchée et récupérée de l'exemple 5, 16,7 g (0,1344 mol, 5% d'excès) de 1,2-époxy-4-vinyl cyclohexane ont été introduits sous argon.

Le mélange est chauffé à 90°C. On coule sur une durée de 3 heures, 100 g (0,128 mol) de polyorganohydrogénosiloxane de formule (XVIII).

En fin de coulée le taux de transformation en SiH est de 87,0%. 2 heures après la coulée, le taux atteint 94,6%, puis 95% 8 heures après et 96,2% 24 heures après.

La masse réactionnelle est filtrée sur fritté avec une précouche de clarcel. La dévolatilisation est effectuée à l'aide d'un évaporateur rotatif à 100°C sous un vide de 2 10² Pa pendant 2 heures.

On récupère une huile fonctionnalisée ayant une viscosité de 270 mpa.s. Après 3 mois de stockage (à température ambiante et sous azote), on retrouve une viscosité identique.

La coloration est de 35 Hazen et la teneur en platine est inférieur à 0,15 ppm.

Le rapport taux d'époxy dosé/taux d'époxy calculé est de 0,92.

On n'observe pas de turbidité.

### Exemple 7 :

Dans un tricol de 100 ml, équipé d'un agitateur vertical, d'un réfrigérant, d'un thermomètre et d'un septum, 0,360 g de composition catalytique hétérogène contenant 2,5% de Pt sur support CECA 2S, et 13,9 g (0,112 mol, 5% d'excès) de 1,2-époxy-4-vinyl-cyclohexane ont été introduits sous argon.

Le mélange est chauffé à 90°C. On coule sur une durée de 3 heures, 90 g (0,107 eq) de polyorganohydrogénosiloxane de formule (XVIII).

En fin de coulée le taux de transformation en SiH est de 90,3% et celle ci atteint 99,1% 8 heures après.

A près filtration, la dévolatilisation est effectuée à 120°C sous un vide de 2 10² Pa pendant 2 heures.

On récupère une huile fonctionnalisée ayant une viscosité de 320 mPa.s. Après 3 mois de stockage (à température ambiante et sous azote), on retrouve une viscosité identique.

La coloration est de 25 Hazen et la teneur en platine est inférieure à 0.17 ppm.

Le rapport taux d'époxy dosé/taux d'époxy calculé est de 0,96.

Pas de turbidité observée.

### Exemple 8 :

Dans un tricol de 250 ml, équipé d'un agitateur vertical, d'un réfrigérant, d'un thermomètre et d'un septum, 0,233 g de composition catalytique hétérogène (5% de Pt sur support constitué de sulfate de baryum) de la société Heraeus (100 ppm de Pt dans le milieu ), et 16,7 g (0,1344 mol, 5% d'excès) de 1,2-époxyde 4-vinyl cyclohexane ont été introduits sous argon.

Le mélange est chauffé à 90°C. Puis, on coule sur une durée de 3 heures, 100 g (0,128 mol) de polyorganohydrogénosiloxane de formule (XVIII).

En fin de coulée le taux de transformation en SiH est de 63,3%. 2 heures après la coulée, ce taux atteint 91,4% et 93,8% 5 heures après la coulée. 24 heures après le taux de transformation est de 93,1%.

La dévotatilisation est effectuée à l'aide d'un évaporateur rotatif à 100°C sous une pression de 2 10² Pa pendant 2 heures.

On récupère une huile fonctionnalisée ayant une viscosité de 280 mPa.s. Après 3 mois de stockage (à température ambiante et sous azote), on retrouve une viscosité identique.

La coloration est de 57 Hazen et la teneur en platine est inférieure à 4,5 ppm.

Le rapport taux d'époxy dosé/taux d'époxy calculé est de 0,96.

Pas de turbidité observée.

### Exemple 9 :

Dans un tube en U équipé d'un thermomètre, on introduit 7,78 g de composition catalytique hétérogène de type CAL 101 non broyée (100 ppm de Pt dans le milieu) et on rince à l'argon.

Dans un tricol de 500 ml relié au tube en U, on introduit 33,4 g de 1,2-époxy- 4-vinyl-cyclohexane (0,2688 mol, 5% d'excès). Le 1,2-époxy- 4-vinyl cyclohexane passe dans le tube en U contenant la composition catalytique (pompe péristaltique avec vitesse = 100 ml/mn) puis retourne dans le ballon.

On chauffe à 90°C le milieu réactionnel. Puis, on coule dans le tricol sur une durée de 3 heures, 200 g de polyorganohydrogénosiloxane de formule (XVIII). Le mélange polyorganohydrogénosiloxane et 1,2-époxyde 4-vinyl cyclohexane est ensuite passé sur la composition catalytique.

En fin de coulée, le taux de transformation des SiH est de 94,8% et 2 heures après celle-ci, le taux atteint 98,4% pour finalement arriver à 100%.

Le milieu réactionnel est filtré sur fritté avec une précouche de clarcel. La dévolatilisation est effectuée à l'aide d'un évaporateur rotatif à 100°C sous un vide de 2 10² Pa pendant 2 heures.

On récupère une huile fonctionnalisée ayant une viscosité de 280 mpa.s. Après 3 mois de stockage (à température ambiante et sous azote), on retrouve une viscosité identique.

La coloration est de 114 Hazen et la teneur en platine est de 2,9 ppm.

Le rapport taux d'époxy dosé/taux d'époxy calculé est de 0,97.

Pas de turbidité observée.

La composition catalytique est récupérée et lavée au toluène dès que la réaction est terminée (8h après le début de la coulée), puis elle est séchée avec un courant d'argon.

### Exemple 10 :

Dans un tube en U équipé d'un thermomètre, on introduit la totalité de la composition catalytique hétérogène de type CAL 101 récupéré de l'exemple 9, lavée et séchée, puis on conditionne l'ensemble sous argon.

Dans un tricol de 500 ml, on charge 33,4 g de 1,2-époxy-4-vinyl-cyclohexane (0,2688 mol, 5% d'excès). Le 1,2-époxy-4-vinyl-cyclohexane est passé sur la composition catalytique contenue dans le tube en U, puis retourne dans le ballon (sous action d'une pompe péristaltique avec vitesse = 100 ml/mn)

On chauffe le milieu réactionnel à 90°C, On coule ensuite sur une durée de 3 heures 200 g de polyorganohydrogénosiloxane de formule (XVIII). Le mélange de polyorganohydrogénosiloxane de formule (XVIII) et de 1,2-époxy-4-vinyl-cyclohexane est ensuite passé sur la composition catalytique (sous action d'une pompe).

En fin de coulée le taux de transformation des SiH est de 92,4%. 2 heures après la fin de cette coulée, le taux de transformation est de 94,1% puis 8 heures après, ce taux atteint 95,4%.

La masse réactionnelle est filtrée sur fritté avec une précouche de clarcel. La dévolatilisation est effectuée à l'aide d'un évaporateur rotatif à 100°C sous une pression de 2 10² Pa pendant 2 heures.

On récupère une huile fonctionnalisée ayant une viscosité de 270 mPa.s. Après 3 mois de stockage (à température ambiante et sous azote), on retrouve une viscosité identique.

L'huile silicone modifiée obtenue est transparente; sa coloration est de 83 Hazen et la teneur en platine est de 2,1 ppm.

Le rapport taux d'époxy dosé/taux d'époxy calculé est de 0,92.

Pas de turbidité observée.

### Exemple 11 :

Dans un tétracol de deux litres, équipé d'un agitateur vertical, d'un réfrigérant, d'un thermomètre et d'une jupe rabattable, 2.045 g de composition catalytique hétérogène contenant 3% de Pt sur support charbon noir séché, de la référence commerciale 7075 d'Engelhard et 13.46 g (0.108 mol, 5% d'excès) de 1,2-époxy-4-vinyl-cyclohexane ont été introduits sous argon.

Le mélange est chauffé à 100°C. On coule sur une durée de deux heures, 600 g (0.103 eq) de polyorganohydrogénosiloxane de formule (XVI) dans laquelle X = CH₃, a = 225 et b = 2.

En fin de coulée le taux de transformation en SiH est de 64,5%. Après 23 heures, il est de 83,3%. Après chauffage à 120°C, le taux de transformation en SiH est de 100% après 5 jours.

Après filtration, la dévolatilisation est effectuée à 120°C sous un vide de 1 10² Pa pendant 5 heures.

On récupère une huile fonctionnalisée ayant une viscosité de 610 mPa·s. On retrouve cette viscosité après stockage pendant trois mois à température ambiante sous azote.

La coloration est de 30 Hazen et la teneur en platine est inférieure à 0.11 ppm.

On n'observe pas de turbidité.

### Exemple 12 :

Dans un réacteur de 3.5 litres, équipé d'un agitateur vertical, d'un réfrigérant, d'un tube plongeur, d'un thermomètre et d'une jupe rabattable, 2.55 g de composition catalytique hétérogène contenant 2.5% de Pt sur support CECA 2S contenant 52% massique d'eau, et 2049 g (16.5 mol, 10% d'excès) de 1,2-époxy-4-vinyl-cyclohexane ont été introduits sous argon.

Le mélange est chauffé à 110°C. On coule sur une durée de cinq heures, par le tube plongeur, 1007 g (15 eq) de polyorganohydrogénosiloxane de formule (XVI) dans laquelle X = H, a = 1 et b = 0.

En fin de coulée le taux de transformation en SiH est de 99.98%.

Après filtration, la dévolatilisation est effectuée à 120°C sous un vide inférieur à 1 10² Pa pendant 10 h.

On récupère une huile fonctionnalisée ayant une viscosité de 51.3 mPa·s. On retrouve cette viscosité après stockage pendant trois mois à température ambiante sous azote.

La coloration est de 30 Hazen et la teneur en platine est inférieure à 0.11 ppm.

On n'observe pas de turbidité (0.2 NTU).

### Exemple 13 :

Dans un tétracol de deux litres, équipé d'un agitateur vertical, d'un réfrigérant, d'un thermomètre et d'une jupe rabattable, 3.74 g de composition catalytique hétérogène contenant 2.5% de Pt sur support CECA 2S séché et 433.85 g (3.8 mol, 5% d'excès) d'allylglycidylether ont été introduits sous argon.

Le mélange est chauffé à 130°C. On coule sur une durée de cinq heures, 500 g (3.62 eq) de polyorganohydrogénosiloxane de formule (XVI) dans laquelle X = H, a = 9 et b = 4.5.

En fin de coulée le taux de transformation en SiH est de 92.7%. Après 10 heures, il est de 99,8%.

Après filtration, la dévolatilisation est effectuée à 120°C sous un vide de 1 10² Pa pendant 5 heures.

On récupère une huile fonctionnalisée ayant une viscosité de 62 mPa·s. On retrouve cette viscosité après stockage pendant trois mois à température ambiante sous azote.

La coloration est de 25 Hazen et la teneur en platine est inférieure à 0.18 ppm.

On n'observe pas de turbidité.

### Exemple 14 :

Dans un tétracol de 100 ml, équipé d'un agitateur vertical, d'un réfrigérant, d'un thermomètre et d'une jupe rabattable, 3.06 g de composition catalytique hétérogène contenant 3% de Pt sur support charbon noir séché, de référence 7075 de la société Engelhard, 20 g de p-Xylène et 6.74 g (41 mmol, 10% d'excès) de l'anhydride nadique ont été introduits sous argon.

Le mélange est chauffé à 120°C. On coule sur une durée de deux heures, 10 g (37.3 meq) de polyorganohydrogénosiloxane de formule (XVI) dans laquelle X = CH3, a = 9.1, et b = 4.

Après 24 heures, le taux de transformation est de 41,7%, puis de 92,4% après 72 heures, de 98,9% après 96 heures et de 99,7% après 120 heures.

Après filtration, la dévolatilisation est effectuée, après une montée en température pendant deux heures, à 120°C sous un vide de 1 10² Pa pendant 5 heures.

On récupère une huile fonctionnalisée incolore.

## Revendications

1. Procédé de préparation d'huile silicone fonctionnalisée, non turbide et de viscosité stable, par hydrosilylation d'un polyorganohydrogénosiloxane avec des synthons, **caractérisé en ce que** :
**(1)** les synthons hydrosilylés avec le polyorganohydrogénosiloxane sont différents ou identiques, et contiennent au moins un cycle hydrocarboné dans lequel est inclus au moins un atome d'oxygène,
**(2)** ladite réaction d'hydrosilylation est effectuée en présence d'une composition catalytique hétérogène comprenant un métal choisi parmi le groupe constitué de cobalt, rhodium, ruthénium, platine et nickel déposé sur un support inerte, ledit support inerte étant sélectionné parmi le groupe constitué de noir de carbone, charbon, alumine, silicate et oxyde de baryum; et
**(3)** le polyorganohydrogénosiloxane est linéaire ou cyclique et de formules moyennes : 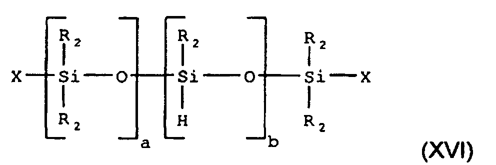 et/ou 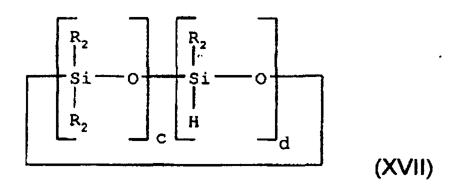 dans lesquelles :
■ les symboles **R**_{**2**} sont identiques ou différents et correspondent à un radical hydrocarboné monovalent choisi parmi le radical phényle et les radicaux alkyles linéaires ou ramifiés ayant de 1 à 6 atomes de carbone,
■ les symboles **X** sont identiques ou différents et correspondent à un radical monovalent choisi parmi **R**_{**2**}, un atome d'hydrogène, un radical méthoxy, et un radical éthoxy;
■ a et b sont des nombres entiers ou fractionnaires, tels que :
- 0 < a ≤ 200,
- 0 ≤ b ≤ 200,
- et au moins un des deux X correspondant au radical hydrogène si b = 0,
- 5 < a+b ≤ 200,
■ c et d sont des nombres entiers ou fractionnaires, tels que :
- 0 < c < 5,
- 1 < d < 10,
- 3 < a+b < 10.
**(4)** à condition que les composés **R**_{**3**}**OH** dans lesquels **R**_{**3**} correspond à un radical alkényle comprenant 3 à 11 atomes de carbones ne sont pas utilisés dans ce procédé.

2. Procédé de préparation selon la revendication 1, **caractérisé en ce que** les huiles fonctionnalisées obtenues sont incolores et préparées en présence d'une composition catalytique selon la revendication 1 dont le support inerte est le noir de carbone.

3. Procédé selon la revendication 1 ou 2, **caractérisé en ce que** les synthons contiennent au moins un cycle hydrocarboné dans lequel est inclus un atome d'oxygène, les synthons ayant pour formule :
■ (1) 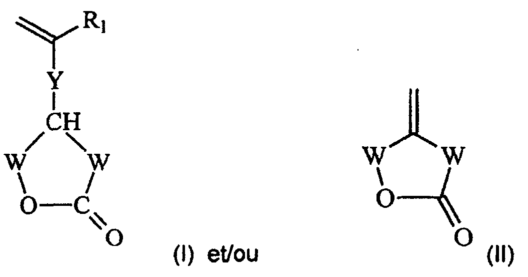 dans lesquelles :
■ les symboles **W** sont identiques ou différents et correspondent à un radical hydrocarboné divalent choisi parmi les radicaux alkylènes linéaires ou ramifiés ayant de 1 à 12 atomes de carbone, un des symboles **W** pouvant être une valence libre;
■ le symbole **Y** correspond à une valence libre ou un radical divalent choisi parmi les radicaux alkylènes linéaires ou ramifiés ayant de 1 à 12 atomes de carbone et pouvant contenir un hétéroatome;
■ le symbole **R**_{**1**} correspond à un atome d'hydrogène ou radical hydrocarboné monovalent choisi parmi les radicaux alkyles linéaires ou ramifiés ayant de 1 à 12 atomes de carbone;
■ (2) 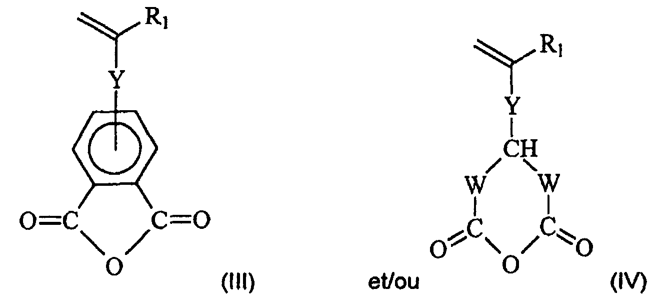 dans lesquelles :
■ les symboles **W** sont identiques ou différents et correspondent à un radical hydrocarboné divalent choisi parmi les radicaux alkylènes linéaires ou ramifiés ayant de 1 à 12 atomes de carbone, un des symboles **W** pouvant être une valence libre;
■ le symbole **Y** correspond à une valence libre ou un radical divalent choisi parmi les radicaux alkylènes linéaires ou ramifiés ayant de 1 à 12 atomes de carbone et pouvant contenir un hétéroatome;
■ le symbole **R**_{**1**} correspond à un atome d'hydrogène ou radical hydrocarboné monovalent choisi parmi les radicaux alkyles linéaires ou ramifiés ayant de 1 à 12 atomes de carbone;
■ (3) 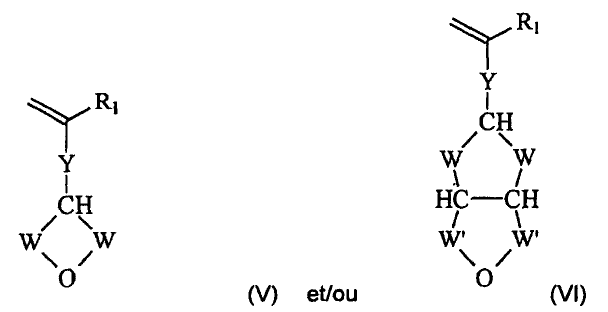 dans lesquelles :
■ les symboles **W** sont identiques ou différents et correspondent à un radical hydrocarboné divalent choisi parmi les radicaux alkylènes linéaires ou ramifiés ayant de 1 à 12 atomes de carbone et pouvant contenir au moins une fonction hydroxyle; un des symboles **W** pouvant être une valence libre pour (V) et les deux symboles **W** peuvent être simultanément une valence libre pour (VI);
■ les symboles **W'** sont identiques ou différents et correspondent à un radical hydrocarboné divalent choisi parmi les radicaux alkylènes linéaires ou ramifiés ayant de 1 à 12 atomes de carbone; au moins un des symboles **W'** pouvant être une valence libre;
■ le symbole **Y** correspond à une valence libre ou un radical divalent choisi parmi les radicaux alkylènes linéaires ou ramifiés ayant de 1 à 12 atomes de carbone et pouvant contenir un hétéroatome;
■ le symbole **R**_{**1**} correspond à un atome d'hydrogène ou radical hydrocarboné monovalent choisi parmi les radicaux alkyles linéaires ou ramifiés ayant de 1 à 12 atomes de carbone; et
■ (4) 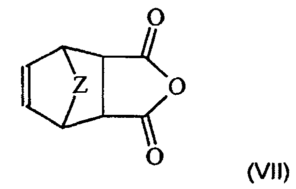 dans laquelle :
■ le symbole **Z** correspond à un radical divalent choisi parmi un atome de carbone ou un hétéroatome.

4. Procédé selon la revendication 3, **caractérisé en ce que** le cycle hydrocarboné des synthons comporte au plus 8 atomes dans ledit cycle.

5. Procédé selon l'une quelconque des revendications 3 ou 4, **caractérisé en ce que** les synthons contiennent un cycle hydrocarboné dans lequel est inclus un atome d'oxygène.

6. Procédé selon l'une quelconque des revendications 3, 4 ou 5, **caractérisé en ce que** le synthon a pour formule : 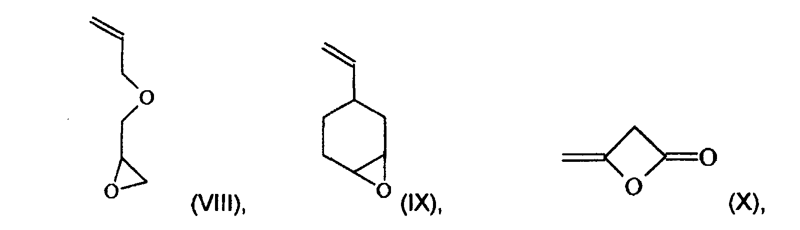 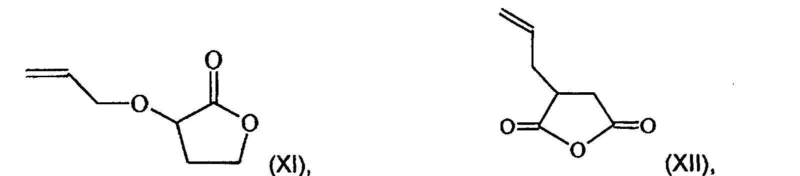 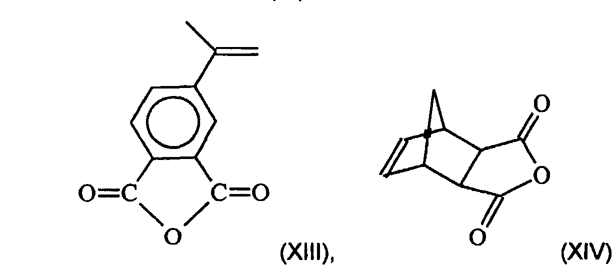 et

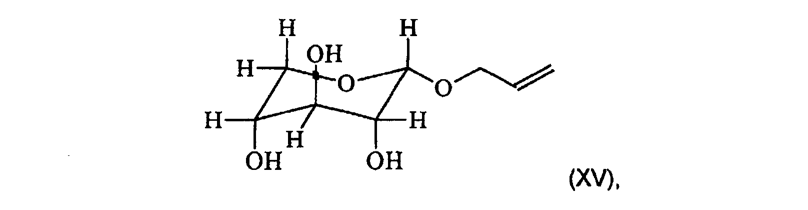

7. Procédé selon l'une quelconque des revendications 3 à 6, **caractérisé en ce que** les synthons réagissant avec le polyorganohydrogénosiloxane sont des synthons identiques.

8. Procédé selon l'une quelconque des revendications 1 à 7, **caractérisé en ce que** le rapport molaire polyorganohydrogénosiloxane/synthons est compris entre 0,01 et 100.

9. Procédé selon l'une quelconque des revendications 1 ou 2, **caractérisé en ce que** la quantité de métal est comprise entre 0,1% et 5% par rapport au poids du support inerte.

10. Procédé selon l'une quelconque des revendications 1 ou 2, **caractérisé en ce que** la quantité de métal de la composition catalytique est comprise entre 1 et 1000 ppm par rapport au poids du polyorganohydrogénosiloxane.

11. Procédé selon l'une quelconque des revendications 1 ou 2, **caractérisé en ce que** le métal de la composition catalytique est le platine.

12. Procédé selon l'une quelconque des revendications précédentes, **caractérisé en ce que** le polyorganohydrogénosiloxane et le synthon passent sur ou à travers un lit fixe de la composition catalytique.

13. Utilisation des huiles silicones susceptibles d'être obtenue par le procédé selon l'une quelconque des revendications 1 à 12 dans la préparation de produits anti-adhérents pour papier, verre, plastique et/ou métal.

14. Utilisation des huiles silicones susceptibles d'être obtenue par le procédé selon l'une quelconque des revendications 1 à 12 dans la préparation de vernis, encres, et/ou revêtements.

15. Procédé selon l'une quelconque des revendications 1 à 12, **caractérisé en ce qu'**il comporte les étapes suivantes :
(a) une quantité de 5 à 5000 ppm, de composition catalytique hétérogène par rapport à la masse totale des réactifs est introduite sous gaz inerte dans le milieu réactionnel;
(b) le synthon est introduit dans le milieu réactionnel;
(c) ledit milieu est chauffé à une température comprise entre 25°C et 200°C;
(d) le polyorganohydrogénosiloxane est ensuite introduite sur une durée comprise 0 et 24 heures; le rapport molaire synthon/polyorganohydrogénoslloxane étant compris entre 1 et 1,10;
(e) la masse réactionnelle est ensuite filtrée afin de séparer la composition catalytique hétérogène et l'huile silicone fonctionnalisée, et
(f) l'huile silicone fonctionnalisée est finalement dévolatilisée.

16. Procédé selon la revendication 15, **caractérisé en ce que** le polyorganohydrogénosiloxane et le synthon réagissent dans le milieu réactionnel en l'absence de solvant.

17. Utilisation d'une composition catalytique hétérogène supportée pour la préparation d'huiles silicones fonctionnalisées selon la revendication 1, stables et non turbides, **caractérisée en ce que** la composition catalytique hétérogène comprend un métal choisi parmi le groupe constitué de cobalt, rhodium, ruthénium, platine et nickel déposé sur un support inerte, ledit support inerte étant sélectionné parmi le groupe constitué de noir de carbone, charbon, alumine, silicate et oxyde de baryum.

18. Utilisation selon la revendication 17 pour la préparation d'huiles silicones fonctionnalisées, stables, non colorées et non turbides, **caractérisée en ce que** le support inerte de la composition catalytique hétérogène est le noir de carbone.

## Patentansprüche

1. Verfahren zur Herstellung von funktionalisiertem Siliconöl, das nicht trübe ist und eine stabile Viskosität hat, durch Hydrosilylierung eines Polyorganohydrogensiloxans mit Synthonen, **dadurch gekennzeichnet, dass**:
**(1)** die mit dem Polyorganohydrogensiloxan hydrosilylierten Synthone verschieden oder gleich sind und wenigstens einen Kohlenwasserstoffring enthalten, in den wenigstens ein Sauerstoffatom eingeschlossen ist,
**(2)** besagte Hydrosilylierungsreaktion ausgeführt wird in Gegenwart einer heterogenen katalytischen Zusammensetzung, die ein Metall umfasst, das aus der Gruppe ausgewählt ist, die aus Kobalt, Rhodium, Ruthenium, Platin und Nickel besteht, abgeschieden auf einem inerten Träger, wobei besagter inerter Träger aus der Gruppe ausgewählt ist, die aus Ruß, Kohle, Aluminiumoxid, Bariumsilikat und -oxid besteht; und
**(3)** das Polyorganohydrogensiloxan linear oder cyclisch ist und die mittleren Formeln: 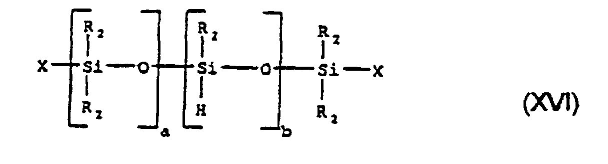 und/oder 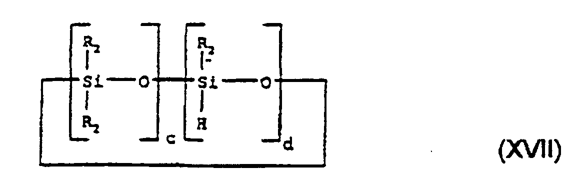 hat, worin:
■ die Symbole **R**_{**2**} gleich oder verschieden sind und einem einwertigen Kohlenwasserstoffrest entsprechen, der ausgewählt ist unter dem Phenylrest und den linearen oder verzweigten Alkylresten mit 1 bis 6 Kohlenstaffatomen,
■ die Symbole X gleich oder verschieden sind und einem einwertigen Rest entsprechen, der ausgewählt ist unter R₂, einem Wasserstoffatom, einem Methoxyrest und einem Ethoxyrest;
■ a und b ganze Zahlen oder Brüche sind, so dass:
- 0 < a ≤ 200,
- 0 ≤ b ≤ 200,
- und wenigstens eines der beiden X dem Wasserstoffrest entspricht, wenn b = 0,
- 5 < a+b ≤ 200,
■ c und d ganze Zahlen oder Brüche sind, so dass:
- 0 < c < 5,
- 1 < d < 10,
- 3 < a+b < 10.
**(4)** mit der Bedingung, dass die Verbindungen R₃OH, worin R₃ einem Alkenylrest mit 3 bis 11 Kohlenstoffatomen entspricht, bei diesem Verfahren nicht verwendet werden.

2. Verfahren zur Herstellung gemäß Anspruch 1, **dadurch gekennzeichnet, dass** die erhaltenen funktionalisierten Öle farblos sind und in Gegenwart einer katalytischen Zusammensetzung gemäß Anspruch 1, deren inerter Träger Ruß ist, hergestellt werden.

3. Verfahren gemäß Anspruch 1 oder 2, **dadurch gekennzeichnet, dass** die Synthone wenigstens einen Kohlenwasserstoffring enthalten, in den ein Sauerstoffatom eingeschlossen ist, wobei die Synthone die Formel haben:
■ (1) 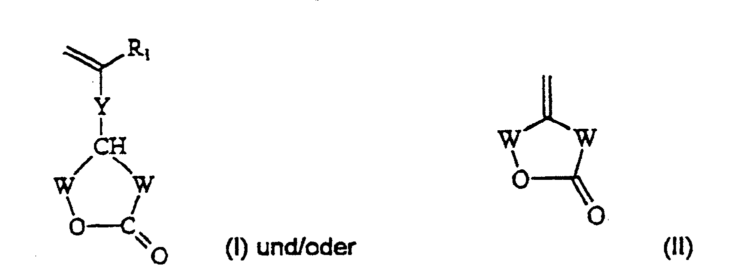 worin:
■ die Symbole **W** gleich oder verschieden sind und einem zweiwertigen Kohlenwasserstoffrest entsprechen, der ausgewählt ist unter den linearen oder verzweigten Alkylenresten mit 1 bis 12 Kohlenstoffatomen, wobei eins der Symbole **W** eine freie Valenz sein kann;
■ das Symbol **Y** einst freien Valenz oder einem zweiwertigen Rest entspricht, der ausgewählt ist unter den linearen oder verzweigten Alkylenresten mit 1 bis 12 Kohlenstoffatomen, die ein Heteroatom enthalten können;
■ das Symbol **R**_{**1**} einem Wasserstoffatom oder einem einwertigen Kohlenwasserstoffrest entspricht, der ausgewählt ist unter den linearen oder verzweigten Alkylresten mit 1 bis 12 Kohlenstoffatomen;
■ (2) 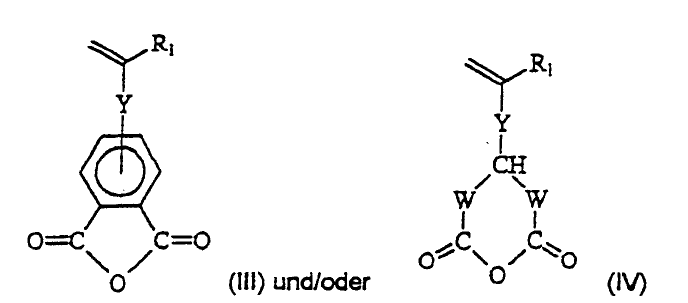 worin:
■ die Symbole **W** gleich oder verschieden sind und einem zweiwertigen Kohlenwasserstoffrest entsprechen, der ausgewählt ist unter den linearen oder verzweigten Alkylenresten mit 1 bis 12 Kohlenstoffatomen, wobei eins der Symbole **W** eine freie Valenz sein kann;
■ das Symbol **Y** einer freien Valenz oder einem zweiwertigen Rest entspricht, der ausgewählt ist unter den linearen oder verzweigten Alkylenresten mit 1 bis 12 Kohlenstoffatomen, die ein Heteroatom enthalten können;
■ das Symbol **R**_{**1**} einem Wasserstoffatom oder einem einwertigen Kohlenwasserstoffrest entspricht, der ausgewählt ist unter den linearen oder verzweigten Alkylresten mit 1 bis 12 Kohlenstoffatomen;
■ (3) 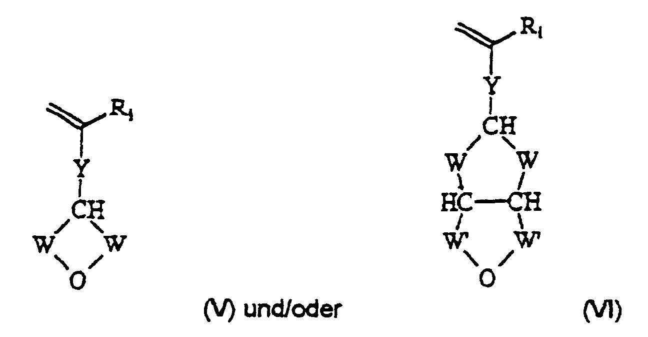 worin:
■ die Symbole **W** gleich oder verschieden sind und einem zweiwertigen Kohlenwasserstoffrest entsprechen, der ausgewählt ist unter den linearen oder verzweigten Alkylenresten mit 1 bis 12 Kohlenstoffatomen, die wenigstens eine Hydroxylfunktion enthalten können; wobei für (V) eins der Symbole W eine freie Valenz sein kann und für (VI) beide Symbole **W** gleichzeitig eine freie Valenz sein können;
■ die Symbole **W** gleich oder verschieden sind und einem zweiwertigen Kohlenwasserstoffrest entsprechen, der ausgewählt ist unter den linearen oder verzweigten Alkylenresten mit 1 bis 12 Kohlenstoffatomen; wobei wenigstens eins der Symbole **W'** eine freie Valenz sein kann;
■ das Symbol **Y** einer freien Valenz oder einem zweiwertigen Rest entspricht, der ausgewählt ist unter den linearen oder verzweigten Alkylenresten mit 1 bis 12 Kohlenstoffatomen, die ein Heteroatom enthalten können;
■ das Symbol **R**_{**1**} einem Wasserstoffatom oder einem einwertigen Kohlenwasserstoffrest entspricht, der ausgewählt ist unter den linearen oder verzweigten Alkylresten mit 1 bis 12 Kohlenstoffatomen; und
■ (4) 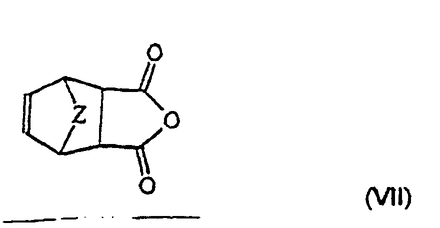 worin:
■ das Symbol **Z** einem zweiwertigen Rest entspricht, der ausgewählt ist unter einem Kohlenstoffatom oder einem Heteroatom.

4. Verfahren gemäß Anspruch 3, **dadurch gekennzeichnet, dass** der Kohlenwasserstoffring der Synthone höchstens 8 Atome in besagtem Ring umfasst.

5. Verfahren gemäß einem der Ansprüche 3 oder 4, **dadurch gekennzeichnet, dass** die Synthone einen Kohlenwasserstoffring enthalten, in den ein Sauerstoffatom eingeschlossen ist.

6. Verfahren gemäß einem der Ansprüche 3, 4 oder 5, **dadurch gekennzeichnet, dass** das Synthon die Formel: 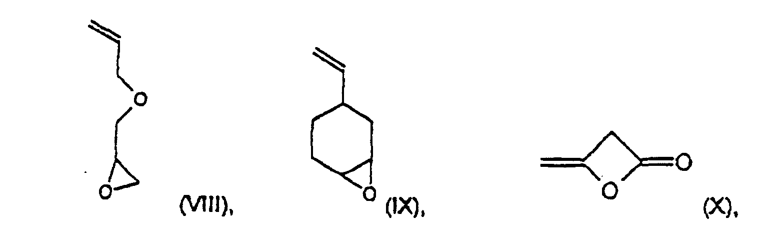 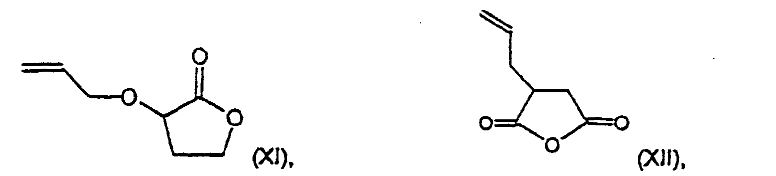 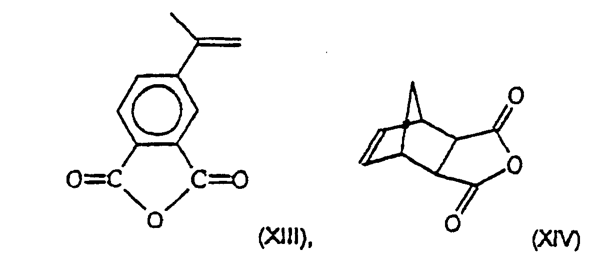 und 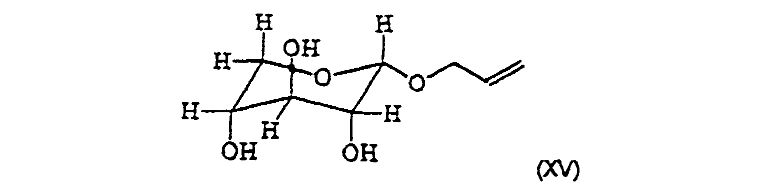 hat.

7. Verfahren gemäß einem der Ansprüche 3 bis 6, **dadurch gekennzeichnet, dass** die Synthone, die mit dem Polyorganohydrogensiloxan reagieren, gleiche Synthone sind.

8. Verfahren gemäß einem der Ansprüche 1 bis 7, **dadurch gekennzeichnet, dass** das Molverhältnis Polyorganohydrogensiloxan/Synthone zwischen 0,01 und 100 liegt.

9. Verfahren gemäß einem der Ansprüche 1 oder 2, **dadurch gekennzeichnet, dass** die Menge an Metall zwischen 0,1 % und 5 %, bezogen auf das Gewicht des inerten Trägers, liegt.

10. Verfahren gemäß einem der Ansprüche 1 oder 2, **dadurch gekennzeichnet, dass** die Menge an Metall der katalytischen Zusammensetzung zwischen 1 und 1000 ppm, bezogen auf das Gewicht des Polyorganohydrogensiloxans, liegt

11. Verfahren gemäß einem der Ansprüche 1 oder 2, **dadurch gekennzeichnet, dass** das Metall der katalytischen Zusammensetzung Platin ist.

12. Verfahren gemäß einem der vorhergehenden Ansprüche, **dadurch gekennzeichnet, dass** das Polycrganohydrogensiloxan und das Synthon über oder durch ein Fesibett der katalytischen Zusammensetzung strömen.

13. Verwendung der Siliconöle, die durch das Verfahren gemäß einem der Ansprüche 1 bis 12 erhalten werden können, bei der Herstellung von Antihaftprodukten für Papier, Glas, Kunststoff und/oder Metall.

14. Verwendung der Siliconöle, die durch das Verfahren gemäß einem der Ansprüche 1 bis 12 erhalten werden können, bei der Herstellung von Lacken, Druckfarben und/oder Beschichtungen.

15. Verfahren gemäß einem der Ansprüche 1 bis 12, **dadurch gekennzeichnet, dass** es die folgenden Schritte umfasst:
(a)eine Menge von 5 bis 5000 ppm heterogene katalytische Zusammensetzung, bezogen auf die Gesamtmasse der Reaktanten, wird unter Inertgas in das Reaktionsmedium eingeführt;
(b) das Synthon wird in das Reaktionsmedium eingeführt;
(c) besagtes Medium wird auf eine Temperatur zwischen 25 °C und 200 °C erhitzt;
(d) das Polyorganohydrogensiloxan wird dann über eine Dauer zwischen 0 und 24 Stunden eingeführt; wobei das Molverhältnis Synthon/Polyorganohydrogensiloxan zwischen 1 und 1,10 liegt;
(e) die Reaktionsmasse wird dann filtriert, um die heterogene katalytische Zusammensetzung und das funktionalisierte Siliconöl zu trennen, und
(f) das funktionalisierte Siliconöl wird schließlich entgast.

16. Verfahren gemäß Anspruch 15, **dadurch gekennzeichnet, dass** das Polyorganohydrogensiloxan und das Synthon in dem Reaktionsmedium in Abwesenheit von Lösungsmittel reagieren.

17. Verwendung einer trägergebundenen heterogenen katalytischen Zusammensetzung für die Herstellung von funktionalisierten Siliconölen gemäß Anspruch 1, die stabil und nicht trübe sind, **dadurch gekennzeichnet, dass** die heterogene katalytische Zusammensetzung ein Metall umfasst, das ausgewählt ist aus der Gruppe, die aus Kobalt, Rhodium, Ruthenium, Platin und Nickel besteht, abgeschieden auf einem inerten Träger, wobei besagter inerter Träger ausgewählt ist aus der Gruppe, die aus Ruß, Kohle, Aluminiumoxid, Bariumsilikat und -oxid besteht.

18. Verwendung gemäß Anspruch 17 für die Herstellung von funktionalisierten Siliconölen, die stabil, nicht gefärbt und nicht trübe sind, **dadurch gekennzeichnet, dass** der inerte Träger der heterogenen katalytischen Zusammensetzung Ruß ist.

## Claims

1. Process for the preparation of a nonturbid functionalized silicone oil of stable viscosity by hydrosilylation of a polyorganohydrosiloxane with synthons, **characterized in that**:
**(1)** the synthons hydrosilylated with the polyorganohydrosiloxane are different or identical, and comprise at least one hydrocarbon-comprising ring in which is included at least one oxygen atom,
**(2)** the said hydrosilylation reaction is carried out in the presence of a heterogeneous catalytic composition comprising a metal chosen from the group consisting of cobalt, rhodium, ruthenium, platinum and nickel deposited on an inert support, the said inert support being selected from the group consisting of carbon black, charcoal, alumina, silicate and barium oxide; and
**(3)** the polyorganohydrosiloxane is linear or cyclic and has the mean formulae: 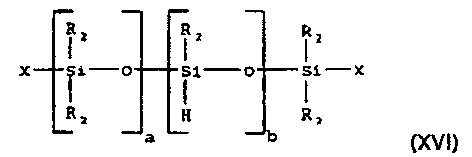 and/or 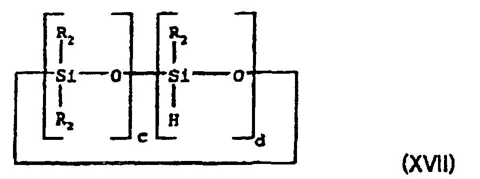 in which:
■ the symbols **R**_{**2**} are identical or different and correspond to a monovalent hydrocarbon-comprising radical chosen from the phenyl radical and linear or branched alkyl radicals having from 1 to 6 carbon atoms,
■ the symbols **X** are identical or different and correspond to a monovalent radical chosen from **R**_{**2**}, a hydrogen atom, a methoxy radical and an ethoxy radical;
■ a and b are integers or fractions, such that:
- 0 < a ≤ 200,
- 0 ≤ b ≤ 200,
- and at least one of the two X groups corresponds to the hydrogen radical if b = 0,
- 5 < a + b ≤ 200;
■ c and d are integers or fractions, such that:
- 0 < c < 5,
- 1 < d < 10,
- 3 < a + b < 10.
**(4)** with the proviso that the **R**_{**3**}**OH** compounds in which **R**_{**3**} corresponds to an alkenyl radical comprising 3 to 11 carbon atoms are not used in this process.

2. Preparation process according to Claim 1, **characterized in that** the functionalized oils obtained are colourless and prepared in the presence of a catalytic composition according to Claim 1, the inert support for which is carbon black.

3. Process according to Claim 1 or 2, **characterized in that** the synthons comprise at least one hydrocarbon-comprising ring in which is included an oxygen atom, the synthons having the formula:
■ (1) 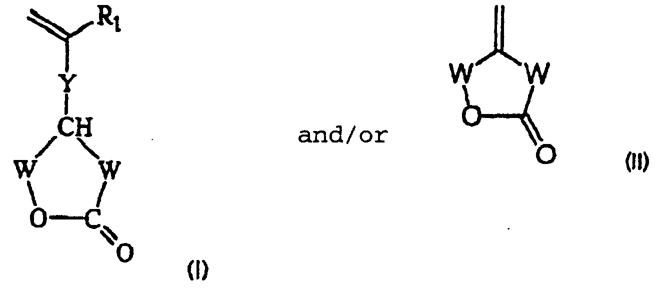 in which:
■ the symbols **W** are identical or different and correspond to a divalent hydrocarbon-comprising radical chosen from linear or branched alkylene radicals having from 1 to 12 carbon atoms, it being possible for one of the symbols **W** to be a free valency;
■ the symbol **Y** corresponds to a free valency or a divalent radical chosen from linear or branched alkylene radicals having from 1 to 12 carbon atoms which can comprise a heteroatom;
■ the symbol **R**_{**1**} corresponds to a hydrogen atom or monovalent hydrocarbon-comprising radical chosen from linear or branched alkyl radicals having from 1 to 12 carbon atoms;
■ 2) 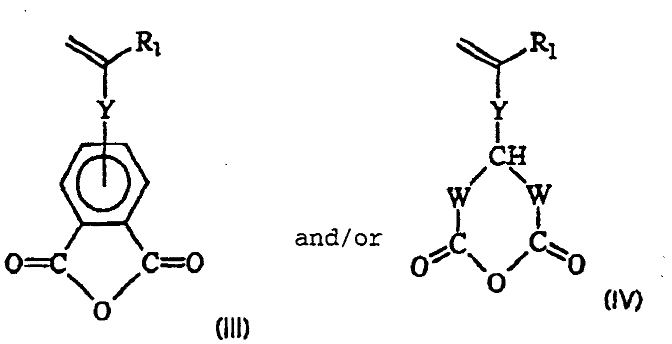 in which:
■ the symbols **W** are identical or different and correspond to a divalent hydrocarbon-comprising radical chosen from linear or branched alkylene radicals having from 1 to 12 carbon atoms, it being possible for one of the symbols **W** to be a free valency;
■ the symbol **Y** corresponds to a free valency or a divalent radical chosen from linear or branched alkylene radicals having from 1 to 12 carbon atoms which can comprise a heteroatom;
■ the symbol **R**_{**1**} corresponds to a hydrogen atom or monovalent hydrocarbon-comprising radical chosen from linear or branched alkyl radicals having from 1 to 12 carbon atoms;
■ (3) 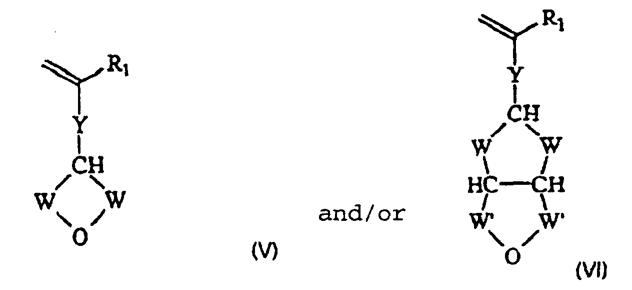 in which:
■ the symbols **W** are identical or different and correspond to a divalent hydrocarbon-comprising radical chosen from linear or branched alkylene radicals having from 1 to 12 carbon atoms which can comprise at least one hydroxyl functional group; it being possible for one of the symbols W to be a free valency for (V) and it being possible for both symbols **W** simultaneously to be a free valency for (VI);
■ the symbols **W'** are identical or different and correspond to a divalent hydrocarbon-comprising radical chosen from linear or branched alkylene radicals having from 1 to 12 carbon atoms; it being possible for at least one of the symbols **W'** to be a free valency;
■ the symbol **Y** corresponds to a free valency or a divalent radical chosen from linear or branched alkylene radicals having from 1 to 12 carbon atoms which can comprise a heteroatom;
■ the symbol **R**_{**1**} corresponds to a hydrogen atom or monovalent hydrocarbon-comprising radical chosen from linear or branched alkyl radicals having from 1 to 12 carbon atoms; and
■ (4) 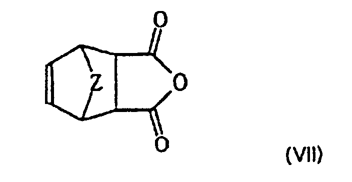 in which:
■ the symbol **Z** corresponds to a divalent radical chosen from a carbon atom or a heteroatom.

4. Process according to Claim 3, **characterized in that** the hydrocarbon-comprising ring of the synthons comprises at most 8 atoms in the said ring.

5. Process according to either one of Claims 3 and 4, **characterized in that** the synthons comprise a hydrocarbon-comprising ring in which is included an oxygen atom.

6. Process according to any one of Claims 3, 4 and 5, **characterized in that** the synthon has the formula: 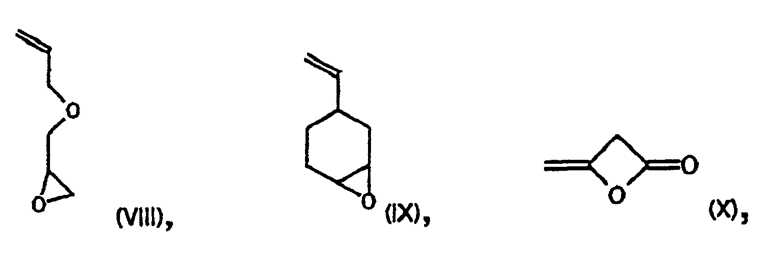 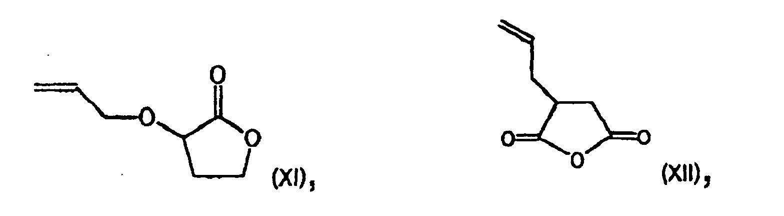 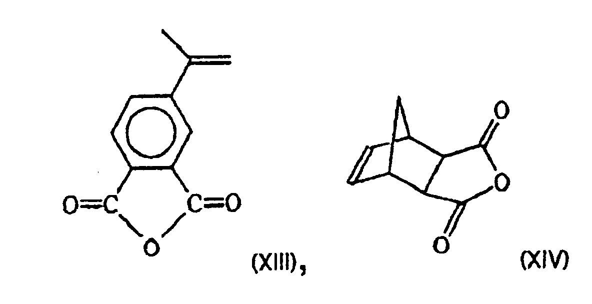 and

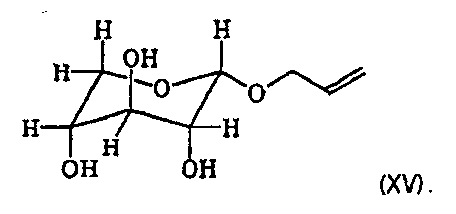

7. Process according to any one of Claims 3 to 6, **characterized in that** the synthons which react with the polyorganohydrosiloxane are identical synthons.

8. Process according to any one of Claims 1 to 7, **characterized in that** the polyorganohydrosiloxane/synthons molar ratio is between 0.01 and 100.

9. Process according to either one of Claims 1 and 2, **characterized in that** the amount of metal is between 0.1% and 5% with respect to the weight of the inert support.

10. Process according to either one of Claims 1 and 2, **characterized in that** the amount of metal in the catalytic composition is between 1 and 1000 ppm with respect to the weight of the polyorganohydrosiloxane.

11. Process according to either one of Claims 1 and 2, **characterized in that** the metal of the catalytic composition is platinum.

12. Process according to any one of the preceding claims, **characterized in that** the polyorganohydrosiloxane and the synthon pass over or through a stationary bed of the catalytic composition.

13. Use of the silicone oils which can be obtained by the process according to any one of Claims 1 to 12 in the preparation of antiadhesion products for paper, glass, plastic and/or metal.

14. Use of the silicone oils which can be obtained by the process according to any one of Claims 1 to 12 in the preparation of varnishes, inks and/or coatings.

15. Process according to any one of Claims 1 to 12, **characterized in that** it comprises the following stages:
(a) an amount of 5 to 5000 ppm of heterogeneous catalytic composition with respect to the total mass of the reactants is introduced under an inert gas into the reaction mixture;
(b) the synthon is introduced into the reaction mixture;
(c) the said mixture is heated to a temperature of between 25°C and 200°C;
(d) the polyorganohydrosiloxane is subsequently introduced over a period of time of between 0 and 24 hours; the synthon/polyorganohydrosiloxane molar ratio being between 1 and 1.10;
(e) the reaction mass is subsequently filtered in order to separate the heterogeneous catalytic composition and the functionalized silicone oil; and
(f) the functionalized silicone oil is finally devolatilized.

16. Process according to Claim 15, **characterized in that** the polyorganohydrosiloxane and the synthon react in the reaction mixture in the absence of solvent.

17. Use of a supported heterogeneous catalytic composition in the preparation of functionalized silicone oils according to Claim 1 which are stable and nonturbid, **characterized in that** the heterogeneous catalytic composition comprises a metal chosen from the group consisting of cobalt, rhodium, ruthenium, platinum and nickel deposited on an inert support, the said inert support being selected from the group consisting of carbon black, charcoal, alumina, silicate and barium oxide.

18. Use according to Claim 17 in the preparation of functionalized silicone oils which are stable, non-coloured and nonturbid, **characterized in that** the inert support of the heterogeneous catalytic composition is carbon black. .
